# EUROPÄISCHE PATENTANMELDUNG

(11) **EP 0 914 898 A1**
(43) Veröffentlichungstag der Anmeldung: **12.05.1999**
(21) Anmeldenummer: 98120454.8
(22) Anmeldetag: 29.10.1998
(51) Int. Cl.: B23K 35/363, B23K 1/20

(54) **Abwasser vermeidendes Lötverfahren**

(30) Priorität: 06.11.1997 DE 19749042
(71) Anmelder: Solvay Fluor und Derivate GmbH, D-30173 Hannover (DE)
(72) Erfinder: Lauzon, Daniel Clément, 30173 Hannover (DE); Schwarze, Thomas, 30173 Hannover (DE)
(74) Vertreter: Lauer, Dieter, Dr.

(57) **Zusammenfassung**

Beschrieben wird ein Abwasser vermeidendes Verfahren zum Verlöten von Bauteilen aus Aluminium und Aluminiumlegierungen unter Verwendung von Flußmitteln insbesondere auf Kaliumfluoraluminat-Basis in wäßriger Suspension. Da nach einer bestimmten Zeitdauer die gebrauchte Suspension gegen frische Suspension ausgetauscht wird und regelmäßig die Apparaturen gereinigt werden müssen, fällt Abwasser an, welches Flußmittel - z. B. Kaliumfluoraluminat - enthält. Solches Abwasser wurde bislang in die Umwelt entlassen. Es wurde jetzt gefunden, daß solches Abwasser nach Abtrennung des Flußmittels in das Lötverfahren rückgeführt werden kann. Auf diese Weise kann der Anfall an Abwasser weitestgehend vermieden werden. Da oft Tenside eingesetzt werden, und diese ebenfalls im Kreislauf geführt werden, ist eine entsprechende Ersparnis am Tensid möglich. Außerdem wird die Umwelt entsprechend geschont.

## Beschreibung

Die Erfindung bezieht sich auf ein Verfahren zum Verlöten von Bauteilen aus Aluminium oder Aluminiumlegierungen unter Verwendung von wäßrigen Flußmittelzubereitungen, ausgewählt aus der Gruppe Kaliumfluorzinkat, Cesiumfluorzinkat, Cesiumfluoraluminat, insbesondere Kaliumfluoraluminat sowie deren Mischungen.

Es ist bekannt, Bauteile aus Aluminium oder Aluminiumlegierungen unter Verwendung von wäßrigen Zubereitungen von Kaliumfluoraluminat enthaltenden Flußmitteln miteinander zu verlöten. Dem Flußmittel kommt die Aufgabe zu, störende Oxidschichten auf den entfetteten Bauteilen zu entfernen, um eine befriedigende Verlötung zu ermöglichen. Hierzu kann eine wäßrige Zubereitung des Kaliumfluroaluminats eingesetzt werden, die auf das oder die Bauteile aufgebracht wird, beispielsweise durch Aufsprühen, durch Eintauchen der Werkstücke in die wäßrige Zubereitung, durch Bestreichen der Werkstücke etc. Die Bauteile werden dann an den miteinander zu verlötenden Stellen in Kontakt gebracht und erhitzt. Zunächst verdampft das Wasser der Suspension, dann schmilzt das Flußmittel. Schließlich bildet sich aus zugesetztem oder in situ entstehendem Lot ein Eutektikum aus Lot und Aluminium oder Aluminiumlegierung, welches die Lötstelle bildet. Die Zubereitung des Flußmittels wird gewöhnlich im Überschuß eingesetzt, so daß man die überschüssige wäßrige Zubereitung des Kaliumfluoralumiat-Flußmittels rückgewinnt und erneut einsetzt. Insbesondere gilt dies bei dem Besprühen der Bauteile. Der Gehalt an Flußmittel und Wasser in der im Kreislauf geführten Zubereitung wird durch Zusatz von Flußmittel bzw. Wasser auf einen vorbestimmten Wert eingestellt. Nach einem vorbestimmten Zeitpunkt, beispielsweise jeweils abends oder nach Schichtende, wird die gebrauchte Zubereitung nicht mehr weiterverwendet, sondern es wird eine frische Zubereitung erzeugt und eingesetzt. Die nicht mehr verwendete Zubereitung stellt ein Abwasser dar, welches Flußmittel enthält und - aufgrund der Löslichkeit des fluorhaltigen Flußmittels - einen hohen Fluorid-Gehalt aufweist. Ein solches Abwasser fällt auch an, wenn nach einem vorbestimmten Zeitpunkt beim Lötverfahren verwendete Apparaturen und Betriebsteile gereinigt werden. Derartige Abwässer wurden bislang mehr oder weniger unbehandelt in die Umgebung entlassen.

Aufgabe der vorliegenden Erfindung ist es, ein umweltschonenderes Lötverfahren anzugeben. Diese Aufgabe wird durch das in den Ansprüchen angegebene Lötverfahren gelöst.

Das erfindungsgemäße Verfahren zum Verlöten von Bauteilen aus Aluminium oder Aluminiumlegierungen, wobei man eine wäßrige Zubereitung eines Flußmittels ausgewählt aus der Gruppe Kaliumfluoraluminat, Cesiumfluoraluminat, Kaliumfluorzinkat und Cesiumfluorzinkat sowie deren Mischungen verwendet und diese im Überschuß mit den zu verlötenden Bauteilen in Kontakt bringt, die Verlötung durchführt und die überschüssige wäßrige Zubereitung des Flußmittels rückgewinnt und nach Einstellung der vorbestimmten Flußmittel-Konzentration durch Zusatz von Flußmittel oder Wasser im Kreislauf führt, wobei zu einem vorbestimmten Zeitpunkt Flußmittel enthaltendes Abwasser anfällt, sieht vor, daß man das Abwasser vom Flußmittel und etwaigen anderen festen Bestandteilen abtrennt, nachbehandelt, mit Frischwasser unter Bildung von aufgefrischtem Brauchwasser ergänzt und das aufgefrischte Brauchwasser in das Lötverfahren rückführt.

Einsetzbar sind insbesondere die bekannten Kaliumfluoraluminat-Flußmittel auf Basis von Verbindungen, die Kalium, Aluminium und Fluor umfassen. Brauchbare Flußmittel und ihre Herstellung werden beispielsweise in den US-Patenten 3,769,099; 4,428,920; 4,579,605; 5,318,764; und den deutschen Offenlegungsschriften 195 01 937; 195 20 812; 196 36 897 beschrieben. Die letztere Patentanmeldung beschreibt ein niedrigschmelzendes K₂AlF₅, welches vorzugsweise aus KOH, Aluminiumhydroxid und Fluorwasserstoffsäure im Molverhältnis von K:Al:F = 2:1:5 hergestellt wird. Das dabei erhaltene Flußmittel hat einen besonders niedrigen Schmelzpunkt (im Bereich von 546 bis 550 °C). Das verwendete Flußmittel kann noch übliche Zusätze enthalten wie Bindemittel, Cäsiumverbindungen, Lotmetall, Lotmetall-Precursor, oder Tenside.

Das erfindungsgemäße Verfahren kann auch beim Verlöten von Bauteilen mit Cesiumfluoraluminat-Flußmittel (siehe US-A 4,689,092), Cesiumfluorzinkat-Flußmittel und Kaliumfluorzinkat-Flußmittel (siehe die nicht vorveröffentlichte deutsche Patentanmeldung ... 198 13 023) sowie deren Gemische (siehe z. B. die US-A 4,670,067, welche Kalium-Cesium-Fluoraluminat-Flußmittel beschreibt) angewendet werden.

Anhand der bevorzugten Ausführungsform - Anwendung auf Kaliumfluoraluminat-Flußmittel - wird die Erfindung weiter erläutert.

Das in Kontaktbringen des Flußmittels mit den zu verlötenden Bauteilen erfolgt vorzugsweise durch Besprühen. Dabei kann man wäßrige Zubereitungen einsetzen, welche das Flußmittel in einer Konzentration von 3 bis 70 Gew.-% enthalten. Das Verlöten selbst geschieht in bekannter Weise: Die zu verbindenden Bauteile werden - gewünschtenfalls in Inertgasatmosphäre, beispielsweise unter Stickstoff oder Argon - auf eine erhöhte Temperatur gebracht (beispielsweise im Lötofen, durch magnetische Induktion oder eine offene Flamme), wobei sich die Lötverbindung ausbildet. Bei Kaliumfluoraluminat-Flußmitteln liegt die Temperatur bei ca. 600 °C, bei Cs-Flußmitteln liegt sie deutlich tiefer.

Beispielsweise können folgende, im Lötverfahren anfallende Abwässer, die Kaliumfluoraluminat enthalten, behandelt werden: Verbrauchte Aufschlämmungen ("Slurries") des Kaliumfluoraluminats in Wasser, welche durch frisch erzeugte Aufschlämmungen ersetzt werden sollen; Waschwasser, welches beim Reinigen von Bauteilen, Apparaturen, Gebäudeteilen oder sonstigen Gegenständen anfallen, die mit der Flußmittelaufschlämmung oder dem Flußmittel in Kontakt gekommen sind; rückgewonnene überschüssige Zubereitung, die nicht mehr eingesetzt werden soll.

Die Abtrennung der Feststoffe kann vorzugsweise durch Filtersysteme und/oder in einem Abwassertank durchgeführt werden, in welchem man Feststoffe absetzen läßt und diese dann abtrennt, beispielsweise durch Abhebern. Die Nachbehandlung kann dazu dienen, unerwünschte Bestandteile aus dem Abwasser zu entfernen, welches nach Abtrennung der Feststoffe erhalten wird. Es kann sich um eine antibakterielle Behandlung handeln, um eine Verdünnung der Aufschlammung etc. Bevorzugt werden vorhandene Schwebstoffe und etwaig verbliebene restliche Feststoffpartikel abgetrennt. Dies kann beispielsweise in einem Filter oder einer Zentrifuge geschehen.

Als Frischwasser setzt man deionisiertes Wasser ein. Das aufgefrischte Brauchwasser kann zweckmäßig in einem Puffertank aufbewahrt werden. Dieser Puffertank sollte so groß sein, daß die gesamte Wassermenge, die in einem vorbestimmten Zeitraum benötigt wird, dort vorrätig gehalten werden kann.

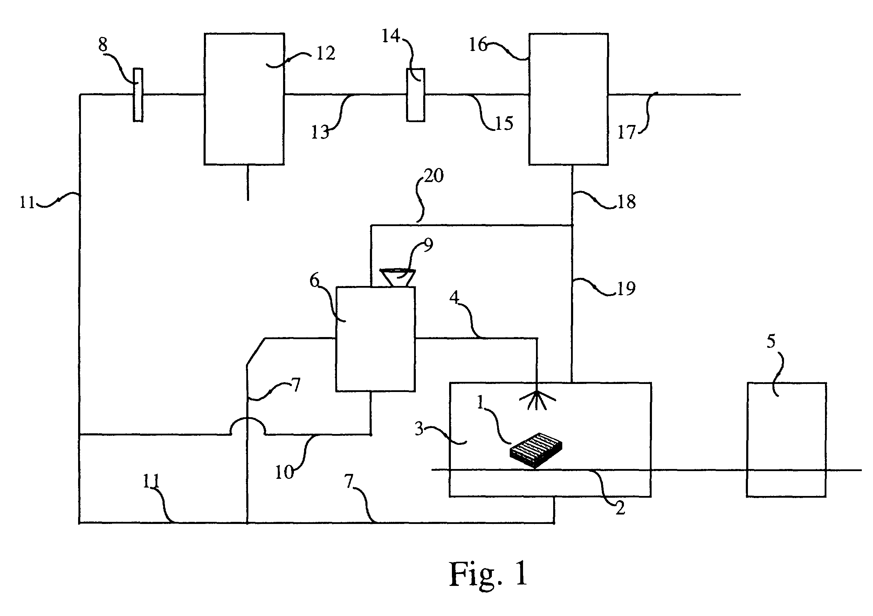

Die Erfindung wird anhand Figur 1 weiter erläutert. Figur 1 stellt eine Anlage dar, mit der das erfindungsgemäße Verfahren durchgeführt werden kann.

Der aus entfetteten Aluminiumbauteilen zusammengesetzte Wärmetauscher 1 wird über das Förderband 2 zunächst in die Sprühkammer 3 eingebracht und dort mit einer wäßrigen Flußmittelzubereitung besprüht, welche über die Leitung 4 in die Sprühkammer eingesprüht wird. Nach dem Verlassen der Sprühkammer 3 wird der Wärmetauscher 1 in den Lötofen 5 eingebracht, dort erhitzt und dabei verlötet. Der verlötete Wärmetaucher 1 verläßt den Lötofen 5, wird dann abgekühlt und weiteren Behandlungsschritten unterzogen, beispielsweise einer Qualitätskontrolle verpackt etc. Die über die Leitung 4 eingesprühte Flußmittelsuspension wird dem Vorratsbehälter 6 entnommen. In der Sprühkammer 3 anfallende überschüssige Flußmittelsuspension wird über die Leitung 7 in den Vorratsbehälter 6 rückgeführt. Nach einem vorbestimmten Zeitpunkt - beispielsweise bei Schichtende - wird die im Vorratsbehälter 6 noch vorhandene Flußmittelsuspension, die in der nächsten Schicht nicht verwendet werden soll, über die Leitungen 10 und 11 in den Absetztank 12 gepumpt. Man läßt dort Feststoffe sich absetzen. Die überstehende Lösung wird aus dem Absetztank 12 über die Leitung 13 durch den Filter 14 geleitet, in welchem Schwebstoffe und vorhandene Feststoffbestandteile ausgefiltert werden. Das gefilterte Abwasser wird über die Leitung 15 in den Puffertank 16 geleitet und dort mit deionisiertem Wasser, welches über die Leitung 17 in den Puffertank 16 eingebracht wird, auf die gewünschte Menge an aufgefrischtem Brauchwasser ergänzt. Das aufgefrischte Brauchwasser wird über die Leitung 18 sowie die Leitungen 19 und 20 zur Reinigung der Sprühkammer 3 und zur Herstellung frischer Flußmittel-Aufschlämmung im Vorratsbehälter 6 verwendet werden. Hierzu kann man das aufgefrischte Brauchwasser über die Leitung 20 unmittelbar in den Vorratsbehälter einleiten.

Während des Besprühens der Bauteile in der Sprühkammer 3 wird naturgemäß ständig eine bestimmte Menge Wasser und eine bestimmte Menge an Flußmittel der im Kreislauf geführten Suspension entnommen. Die Einstellung der gewünschten Konzentration an Flußmittel in der im Kreislauf geführten Flußmittel-Zubereitung erfolgt im Vorratsbehälter 6, welchem über die Leitungen 18 und 20 aufgefrischtes Brauchwasser und über den Einfülltrichter 9 festes Flußmittel zugeführt werden können.

Die Menge an aufgefrischtem Brauchwasser im Puffertank 16 wird zweckmäßig so bemessen, daß sie dem Wasserbedarf für eine vorbestimmte Zeitdauer entspricht. Wenn beispielsweise bei jeder Schicht frische Flußmittel-Aufschlämmung eingesetzt wird, soll die aufgefrischte Brauchwassermenge im Puffertank 16 ausreichen, um die Sprühkammer 3 (und gegebenenfalls weitere Bauteile) reinigen zu können, frische Flußmittel-Zubereitung zu erzeugen und das beim Löten verbrauchte Wasser zu ersetzen.

Es ist empfehlenswert, einen Grobfilter 8 vorzusehen, in welchem grobe Partikel abgefiltert werden können, bevor sie in den Absetztank 12 gelangen.

Der Feststoff, der sich im Absetztank 12 absetzt, enthält gewöhnlich noch sehr viel Wasser. Man kann das Wasser beispielsweise in einer Filterpresse abtrennen und ebenfalls in den Puffertank 16 einleiten.

Eine Variante der Erfindung sieht vor, daß der Tank 12 kein Absetztank ist, in dem Feststoffe sich absetzen, sondern ein Vorratstank, in welchem Einrichtungen vorgesehen sind, die das Absetzen von Feststoffen verhindern. Bei dieser Variante werden sämtliche Feststoffe mit dem Strom des zu behandelnden Wassers über den Filter 14 geführt, um dort ausgefiltert zu werden. Eine Leitung zur Entnahme des abgesetzten Feststoffes, wie bei der Ausführung als Absetztank vorgesehen, ist natürlich nicht nötig.

Gewünschtenfalls kann die verwirbelte Aufschlämmung im Vorratstank 12 noch verdünnt werden, beispielsweise auf einem Feststoffgehalt von 2 bis 5 Gew.-%

Diese Variante bietet den Vorteil, daß man den gesamten Feststoff dem Filter 14 entnehmen kann.

Das erfindungsgemäße Verfahren zeichnet sich dadurch aus, daß keinerlei Abwasser anfällt. Ein weiterer Vorteil ist, daß - sofern Tenside in der Flußmittelzubereitung enthalten sind - das Tensid nicht abgetrennt wird, sondern ebenfalls im Kreislauf geführt wird. Dies bringt eine Ersparnis an Tensideinsatz sowie einen zusätzlichen Erfolg im Hinblick auf die Umweltverträglichkeit mit sich.

Ein weiterer Gegenstand der Erfindung ist eine Lötanlage zur Durchführung des Verfahrens. Sie umfaßt übliche Bauteile wie eine Einrichtung zum Fördern des zu lötenden Materials in einem Lötofen sowie zum Abtransport des gelöteten Materials aus der dem Lötofen, Einrichtungen zum Aufbringen der wäßrigen Flußmittel-Zubereitung auf das zu lötende Gut, einen Vorratstank für Flußmittel-Zubereitung und ist dadurch gekennzeichnet, daß eine Einrichtung zur Abtrennung von Feststoffen aus der verbrauchten Flußmittel-Zubereitung vorgesehen ist, wobei diese Einrichtung über Leitungen mit dem Vorratstank und dem Lötofen verbunden ist, durch die verbrauchte Flußmittel-Zubereitung in die Abtrenneinrichtung geleitet wird sowie eine Leitung, die die Abnahme des abgetrennten Wassers aus der Abtrenneinrichtung zwecks Recycling gestattet.

## Patentansprüche

1. Verfahren zum Verlöten von Bauteilen aus Aluminium oder Aluminiumlegierungen, wobei man eine wäßrige Zubereitung eines Flußmittels aus der Gruppe Kaliumfluoraluminat, Cesiumfluoraluminat, Kaliumfluorzinkat und Cesiumfluorzinkat verwendet und im Überschuß mit den zu verlötenden Bauteilen in Kontakt bringt, die Verlötung durchführt, die überschüssige wäßrige Zubereitung des Flußmittels rückgewinnt und nach Einstellung der vorbestimmten Konzentration durch Zusatz von Flußmittel oder Wasser im Kreislauf führt, wobei zu einem vorbestimmten Zeitpunkt Flußmittel enthaltendes Abwasser anfällt, dadurch gekennzeichnet, daß man das Abwasser vom Flußmittel und etwaigen anderen festen Bestandteilen abtrennt, nachbehandelt, mit Frischwasser unter Bildung von aufgefrischtem Brauchwasser ergänzt und das aufgefrischte Brauchwasser in das Lötverfahren rückführt.

2. Verfahren nach Anspruch 1, dadurch gekennzeichnet, daß man ein Kaliumfluoraluminat-Flußmittel verwendet.

3. Verfahren nach Anspruch 1, dadurch gekennzeichnet, daß die Nachbehandlung die Abtrennung von Schwebstoffen und etwaig verbliebenen anderen Feststoffen umfaßt.

4. Verfahren nach Anspruch 3, dadurch gekennzeichnet, daß die Nachbehandlung die Behandlung mit einem Feststoffilter umfaßt.

5. Verfahren nach Anspruch 1, dadurch gekennzeichnet, daß als Frischwasser deionisiertes Wasser eingesetzt wird.

6. Verfahren nach Anspruch 1, dadurch gekennzeichnet, daß das aufgefrischte Brauchwasser zur Reinigung von Apparaturen, zur Einstellung des vorbestimmten Gehalts an Wasser in der wäßrigen Zubereitung und/oder Herstellung der wäßrigen Flußmittelzubereitung unter suspendieren von Flußmittel verwendet wird.

7. Verfahren nach Anspruch 1, dadurch gekennzeichnet, daß das Abwasser in einem Absetztank aufbewahrt wird.

8. Verfahren nach Anspruch 1, dadurch gekennzeichnet, daß das aufgefrischte Brauchwasser in einem Puffertank aufbewahrt wird.

9. Verfahren nach Anspruch 8, dadurch gekennzeichnet, daß im Puffertank eine vorbestimmte Menge an aufgefrischtem Brauchwasser erzeugt wird.

10. Lötanlage zur Durchführung des Lötverfahrens gemäß den Ansprüchen 1 bis 9, umfassend übliche Bauteile wie eine Einrichtung zum Fördern des zu lötenden Materials in einem Lötofen sowie zum Abtransport des gelöteten Materials aus der dem Lötofen, Einrichtungen zum Aufbringen der wäßrigen Flußmittel-Zubereitung auf das zu lötende Gut, einen Vorratstank für Flußmittel-Zubereitung, dadurch gekennzeichnet, daß eine Einrichtung zur Abtrennung von Feststoffen aus der verbrauchten Flußmittel-Zubereitung vorgesehen ist, wobei diese Einrichtung über Leitungen mit dem Vorratstank und dem Lötofen verbunden ist, durch die verbrauchte Flußmittel-Zubereitung in die Abtrenneinrichtung geleitet wird sowie eine Leitung, die die Abnahme des äbgetrennten Wassers aus der Abtrenneinrichtung zwecks Recycling gestattet.
